(19) Europäisches Patentamt / European Patent Office / Office européen des brevets

(11) **EP 4 693 489 A1**

(12) **EUROPEAN PATENT APPLICATION**
published in accordance with Art. 153(4) EPC

(43) Date of publication:
**11.02.2026 Bulletin 2026/07**

(21) Application number: **24780753.0**

(22) Date of filing: **28.03.2024**

(51) International Patent Classification (IPC):
$H01M\ 4/525^{(2010.01)}$    $C01G\ 53/00^{(2025.01)}$
$H01M\ 4/36^{(2006.01)}$    $H01M\ 4/131^{(2010.01)}$
$H01M\ 4/505^{(2010.01)}$    $H01M\ 10/052^{(2010.01)}$
$H01M\ 10/0562^{(2010.01)}$

(52) Cooperative Patent Classification (CPC):
C01G 53/00; H01M 4/131; H01M 4/36; H01M 4/505;
H01M 4/525; H01M 10/052; H01M 10/0562;
Y02E 60/10

(86) International application number:
**PCT/JP2024/012911**

(87) International publication number:
**WO 2024/204656 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023  JP 2023059405**
**06.06.2023  JP 2023093516**

(71) Applicant: **SUMITOMO METAL MINING CO., LTD.**
**Tokyo**
**105-8716 (JP)**

(72) Inventor: **MATSUMOTO, Satoshi**
**Ichikawa-shi, Chiba 272-8588 (JP)**

(74) Representative: **Jones, Nicholas Andrew**
**Withers & Rogers LLP**
**2 London Bridge**
**London SE1 9RA (GB)**

(54) **COATING-LAYER-PROVIDED POSITIVE ELECTRODE ACTIVE MATERIAL FOR LITHIUM ION SECONDARY BATTERIES, COATING-LAYER FORMING SOLUTION, METHOD FOR PRODUCING COATING-LAYER-PROVIDED POSITIVE ELECTRODE ACTIVE MATERIAL FOR LITHIUM ION SECONDARY BATTERIES, AND ALL-SOLID-STATE LITHIUM ION SECONDARY BATTERY**

(57)    A coated positive electrode active material for lithium ion secondary batteries, including: a lithium metal complex oxide; and a coating layer coating at least a part of a surface of the lithium metal complex oxide at a coating ratio of 60% or greater, wherein the lithium metal complex oxide has a layered rock salt-type structure and contains lithium (Li), nickel (Ni), and an element M (M) at a ratio by number of moles of Li:Ni:M=a:1-x:x, where "a" and "x" satisfy relationships of $0.98 \leq a \leq 1.20$ and $0 \leq x \leq 1.0$, and the element M is one or more types of elements except lithium, nickel, and oxygen, and wherein the coating layer contains lithium, phosphorus, and an element Z, and the element Z is at least one or more types of pentavalent transition metal elements.

FIG.1

## Description

TECHNICAL FIELD

The present invention relates to a coated positive electrode active material for lithium ion secondary batteries, a coating layer forming solution, a method for producing a coated positive electrode active material for lithium ion secondary batteries, and an all-solid-state lithium ion secondary battery.

BACKGROUND ART

In recent years, with the popularization of electric vehicles, the development of small-size and lightweight secondary batteries having a high energy density is strongly desired. As such secondary batteries, there are lithium ion secondary batteries.

In typical lithium ion secondary batteries, oxides, such as $LiCoO_2$, $LiNiO_2$, and $LiMn_2O_4$, are currently used as positive electrode active materials for lithium ion secondary batteries (hereinafter also referred to as "positive electrode active materials"). Lithium metal, lithium alloys, metal oxides, carbon, and the like are used as negative electrode active materials for lithium ion secondary batteries. As electrolytic solutions, electrolytic solutions obtained by dissolving Li salts, such as $LiClO_4$, $LiPF_6$, and the like, as supporting salts in organic solvents, such as ethylene carbonate, dimethyl carbonate, ethyl methyl carbonate, and the like, are used.

Among the components of lithium ion secondary batteries, especially electrolytic solutions are a factor that limits the battery performance, such as fast charging and service life, due to their chemical properties, such as heat resistance, potential window, and the like. Therefore, currently, research and development of all-solid-state lithium ion secondary batteries, of which the battery performance is improved by use of solid electrolytes instead of electrolytic solutions, is actively conducted.

In the ongoing research and development of all-solid-state lithium ion secondary batteries, for example, PTL 1 proposes that sulfide-based solid electrolytes have a high lithium ion conductivity and are favorable for use in all-solid-state lithium ion secondary batteries.

However, as disclosed in NPL 1, when a sulfide-based solid electrolyte comes into contact with an oxide positive electrode active material, a reaction occurs at the interface between the solid electrolyte and the positive electrode active material during charging and discharging, to form a high-resistance layer, which inhibits the operation of the battery. As a result, the battery capacity decreases through repeated charging and discharging.

In order to inhibit the formation of this high-resistance layer, NPL 1 and the like propose providing a coating layer made of lithium niobate on a surface of the positive electrode active material. However, lithium niobate might not be able to sufficiently prevent formation of a resistance layer, because it is said to decompose under charging at a voltage of 4.6 V (vs. Li/Li$^+$) or higher, release oxygen, and inter-diffuse with sulfur of the solid electrolyte layer, to produce a by-product that serves as a resistance. In addition, mixing tends to occur at the interface between the positive electrode active material and the coating layer, thereby insufficiently inhibiting increase in the resistance. Therefore, also when a coating layer made of lithium niobite is provided, the battery capacity decreases through repeated charging and discharging.

As a compound that has the effect of inhibiting mixing, which might occur between a positive electrode active material and a coating layer, compounds containing phosphoric acid are effective, and NPL 2 and the like have proposed that they are extremely stable compared with lithium niobate and the like.

However, compounds containing phosphoric acid can hardly exist while being basic, presenting problems that when used in an acidic solution, they damage the surface of the positive electrode active material, and when used in an organic solution, they tend to lose P (phosphorus) through being heated and have difficulty being in control compositionally. Therefore, it has been difficult to form a coating layer on a surface of a positive electrode active material, using a compound containing phosphoric acid.

CITATION LIST

PATENT LITERATURE

PTL 1: Japanese Patent Application Laid-Open Publication No. 2014-56661

NON-PATENT LITERATURE

NPL 1: Narumi Ohta et al., "LiNbO3-coated LiCoO2 as cathode material for all solid-state lithium secondary batteries", Electrochemistry Communications 9 (2007) 1486-1490
NPL 2: William D. et al. , "Interface Stability in Solid-State Batterie", Chem. Mater. 2016, 28, 266-273

SUMMARY OF THE INVENTION

TECHNICAL PROBLEM

In view of the above problems of the related art, according to an aspect of the present invention, an object is to provide a coated positive electrode active material for lithium ion secondary batteries that can inhibit a decrease in the battery capacity when applied to an all-solid-state lithium ion secondary battery using a solid electrolyte and subjected to repeated charging and discharging.

SOLUTION TO THE PROBLEM

In order to solve the above problem, one embodiment of the present invention provides a coated positive electrode active material for lithium ion secondary batteries, including:

a lithium metal complex oxide; and
a coating layer coating at least a part of a surface of the lithium metal complex oxide at a coating ratio of 60% or greater, wherein the lithium metal complex oxide has a layered rock salt-type structure and contains lithium (Li), nickel (Ni), and an element M (M) at a ratio by number of moles of Li:Ni:M=a:1-x:x, where "a" and "x" satisfy relationships of $0.98 \leq a \leq 1.20$ and $0 \leq x \leq 1.0$, and the element M is one or more types of elements except lithium, nickel, and oxygen, and the coating layer contains lithium, phosphorus, and an element Z, where the element Z is at least one or more types of pentavalent transition metal elements.

ADVANTAGEOUS EFFECTS OF THE INVENTION

According to one embodiment of the present invention, it is possible to provide a coated positive electrode active material for lithium ion secondary batteries that can inhibit a decrease in the battery capacity when be applied to an all-solid-state lithium ion secondary battery using a solid electrolyte and subjected to repeated charging and discharging.

BRIEF DESCRIPTION OF THE DRAWINGS

[FIG. 1] FIG. 1 is a schematic cross-sectional view of a coated positive electrode active material for lithium ion secondary batteries according to an embodiment of the present disclosure.
[FIG. 2] FIG. 2 is a schematic cross-sectional view of a lithium ion secondary battery.
[FIG. 3] FIG. 3 is an explanatory view of a cross-sectional configuration of a test battery used for evaluating battery characteristics.

DETAILED DESCRIPTION OF THE INVENTION

Embodiments for carrying out the present invention will be described below with reference to the drawings. However, the present invention is not limited to the following embodiments, and various modifications and replacements are applicable to the following embodiments without departing from the scope of the present invention.
A coated positive electrode active material for lithium ion secondary batteries, a coating layer forming solution, a method for producing a coated positive electrode active material for lithium ion secondary batteries, and an all-solid-state lithium ion secondary battery according to an embodiment of the present invention will be described according to the following order.

1. Coated Positive Electrode Active Material for Lithium Ion Secondary Batteries

1-1. Lithium Metal Complex Oxide
1-2. Coating Layer
1-3. Other Characteristics of Coated Positive Electrode Active Material for Lithium Ion Secondary Batteries

2. Coating Layer Forming Solution and Method for Producing Coated Positive Electrode Active Material for Lithium Ion Secondary Batteries
3. All-Solid-State Lithium Ion Secondary Battery

3-1. Positive Electrode
3-2. Negative Electrode
3-3. Solid Electrolyte Layer
3-4. Shape and Configuration of Secondary Battery
3-5. Battery Evaluation of Secondary Battery

<1. Coated Positive Electrode Active Material for Lithium Ion Secondary Batteries>

The inventors of the present invention have studied a coated positive electrode active material for lithium ion secondary batteries that can inhibit a decrease in the battery capacity when be applied to an all-solid-state lithium ion secondary battery (hereinafter, also referred to as "secondary battery") using a solid electrolyte and subjected to repeated charging and discharging. Specifically, a coated positive electrode active material for lithium ion secondary batteries (hereinafter also referred to as "coated positive electrode active material"), which has a coating layer capable of inhibiting an interfacial reaction between the solid electrolyte and the positive electrode active material, has been intensively studied. As a result, it has been found that coating a surface of a lithium metal complex oxide, which is a positive electrode active material, with a coating layer containing lithium, phosphorus, and an element Z in a predetermined amount or more so as to achieve a predetermined coating ratio makes it possible to inhibit a decrease in the battery capacity through repeated charging and discharging in an application to a secondary battery. In this way, the present invention has been completed.

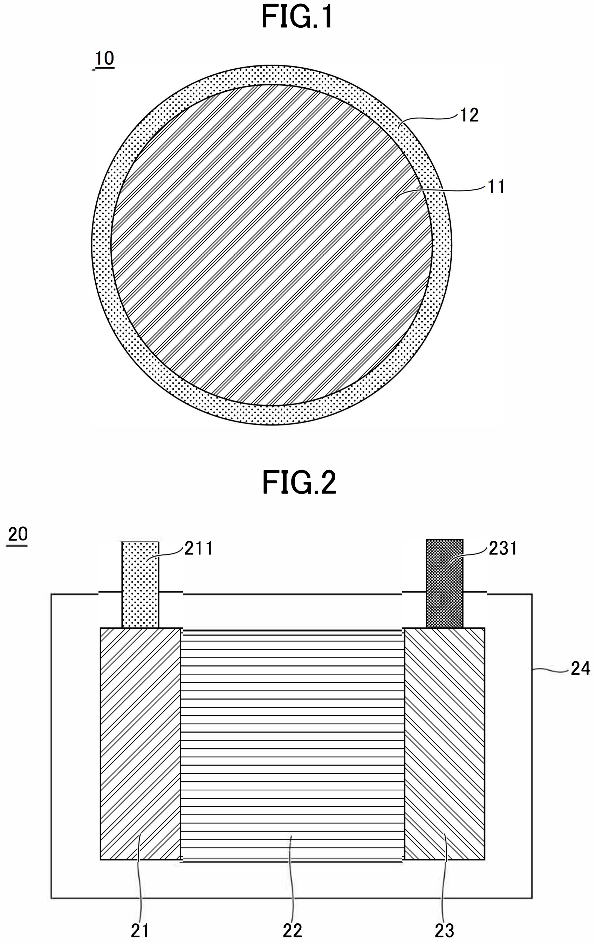

As shown in the schematic cross-sectional view shown in FIG. 1, a coated positive electrode active material for lithium ion secondary batteries 10 of the present embodiment may include a lithium metal complex oxide 11, which is a positive electrode active material, and a coating layer 12, which coats at least a part of the surface of the lithium metal complex oxide 11. Although FIG. 1 is a schematic cross-sectional view showing the lithium metal complex oxide 11 as a circle, the cross-sectional shape does not need to be circular and can have any shape. As will be described later, the coating layer 12 needs only to coat at least a part of the surface of the lithium metal complex oxide 11, does not need to coat the entire surface of the lithium metal complex oxide 11, and does not need to have a constant thickness.

Each member contained in the coated positive electrode active material for lithium ion secondary batteries of the present embodiment will be described below.

<1-1. Lithium Metal Complex Oxide>

The lithium metal complex oxide, which is the positive electrode active material contained in the coated positive electrode active material of the present embodiment, has a layered rock salt-type structure and can contain lithium (Li), nickel (Ni), and an element M (M) at a ratio by number of moles of $Li:Ni:M=a:1-x:x$. In the above formula, Ni represents nickel, and the element M represents one or more types of elements except lithium, nickel, and oxygen.

The value of "a" indicating the content of lithium in the above formula can be 0.98 or greater and 1.20 or less, i.e., may satisfy $0.98 \leq a \leq 1.20$. The value of "a" is more preferably 1.00 or greater and 1.10 or less.

By setting the value of "a" to 0.98 or greater, it is possible to inhibit the internal resistance of a secondary battery using the coated positive electrode active material containing the lithium metal complex oxide, and to improve the output characteristics. In addition, by setting the value of "a" to 1.20 or less, it is possible to maintain the initial discharge capacity of a secondary battery using the coated positive electrode active material containing the lithium metal complex oxide to be high. That is, by setting the value of "a" within the range described above, it is possible to improve the output characteristics and the capacity characteristics of a secondary battery using the coated positive electrode active material containing the lithium metal complex oxide.

Nickel (Ni) of the lithium metal complex oxide is an element that contributes to the capacity enhancement of a secondary battery using the positive electrode active material containing the lithium metal complex oxide. In the lithium metal complex oxide, part or the entirety of nickel can be replaced with the element M. Therefore, the value of "x", which represents the amount by which nickel is replaced, can be set to $0 \leq x \leq 1.0$. However, since nickel (Ni) contributes to the capacity enhancement of a secondary battery using the positive electrode active material containing the lithium metal complex oxide as described above, it is preferable that the lithium metal complex oxide contains nickel, and x is preferably $0 \leq x \leq 0.7$. In particular, x is more preferably $0 \leq x \leq 0.65$.

The element M is one or more types of elements except lithium, nickel, and oxygen, and can replace part or the entirety of nickel. The element M can contain at least one or more types selected from, for example, Al (aluminum), Ti (titanium), V (vanadium), Mn (manganese), Fe (iron), Co (cobalt), Cu (copper), Zr (zirconium), Nb (niobium), Mo (molybdenum), Ta (tantalum), and W (tungsten). The element M may be at least one or more types selected from the above group of elements.

It is preferable that the element M contains at least cobalt. When the lithium metal complex oxide contains cobalt, the structure of the lithium metal complex oxide is facilitated in being stabilized during charging and discharging, which makes it possible to inhibit degradation of the lithium metal complex oxide during use of a secondary battery at a high voltage.

The structure of the lithium metal complex oxide can be identified by analytical methods, such as X-ray diffraction, electron diffraction, and the like. The ratio by number of moles of the elements contained in the lithium metal complex oxide and the coated positive electrode active material can be known by analytical methods, such as fluorescent X-ray analysis, ICP atomic emission spectroscopy, and the like.

The volume average particle diameter of the particles of the lithium metal complex oxide, when measured by a laser diffraction-scattering particle size analyzer, is preferably 1 $\mu$m or greater and 10 $\mu$m or less, more preferably 2 $\mu$m or greater 7 $\mu$m or less, and yet more preferably 3 $\mu$m or greater 5 $\mu$m or less. This is because, when the volume average particle diameter of the particles of the lithium metal complex oxide is 1 $\mu$m or greater and 10 $\mu$m or less, it is possible to secure a sufficiently high battery capacity per volume in a secondary battery using the coated positive electrode active material containing the particles of the lithium metal complex oxide as a positive electrode.

<1-2. Coating Layer>

The coating layer can contain lithium, phosphorus, and an element Z.

For example, the coating layer can contain a compound or a mixture containing one or more types selected from lithium, phosphorus, an element Z, and oxygen. Examples of the mixture include a mixture of a compound containing one or more types selected from lithium, phosphorus, the element Z, and oxygen, and the coating layer can contain, for example, any two or more of Li-P-O compounds, Li-P-Z-O compounds, and Li-Z-O compounds.

The element Z is at least one or more types of pentavalent transition metal elements, and is preferably Nb (niobium).

By positioning the coating layer on the surface of the particles of the lithium metal complex oxide, it is possible to inhibit increase in the interfacial resistance between the lithium metal complex oxide and the solid electrolyte in a secondary battery including a positive electrode containing the coated positive electrode active material of the present embodiment.

(Coating Ratio)

It is preferable to position the coating layer such that the coating ratio on the surface of the particles of the lithium metal complex oxide is equal to or greater than a predetermined value.

The coating ratio of the coating layer, more specifically, the degree of the area by which the particles of the lithium metal complex oxide are coated, can be calculated using the result of semi-quantitative analysis by X-ray Photoelectron Spectroscopy (XPS). Specifically, the degree can be known from the ratio of the sum of the numbers of moles in phosphorus and the element Z that are present on the surface to the sum of the numbers of moles in phosphorus, the element Z, nickel, and the element M, the ratio being known from the result of the semi-quantitative analysis by XPS for the coated positive electrode active material. The coating ratio of the coating layer can be calculated by, for example, the following equation (1). In the following equation (1), P, Z, Ni, and M correspond to the numbers of moles of phosphorus, the element Z, nickel, and the element M measured by XPS, respectively.

$$\text{(Coating ratio of the coating layer (\%))} = (P + Z)/(P + Z + Ni + M) \times 100 \qquad (1)$$

Since XPS can selectively obtain information of 1 nm or greater and 5 nm or less from the surface of the object to be measured, the composition ratio in the surface layer of the material can be known from the XPS measurement result. The coating ratio of the coating layer is preferably 60% or greater, more preferably 65% or greater, and yet more preferably 70% or greater. The coating ratio of 60% or greater has the effect of preventing both of an interfacial reaction between the lithium metal complex oxide and the solid electrolyte and mixing at the interface between the lithium metal complex oxide and the coating layer, making it possible to inhibit degradation during cycles. The coating layer containing lithium, phosphorus, and the element Z can enhance the stability even during high-voltage charging.

The upper limit of the coating ratio is not particularly limited, yet can be, for example, 100% or less, and is preferably 90% or less.

(Ratio by Number of Moles of Element Z to Phosphorus)

It is preferable that Z/P, which is the ratio by number of moles of the element Z (Z) to phosphorus (P) contained in the coating layer, satisfies $0.5 \leq Z/P \leq 3.0$. By setting Z/P within the above range, it is possible to particularly enhance the effect of preventing both an interfacial reaction between the lithium metal complex oxide and the solid electrolyte and mixing at the interface between the lithium metal complex oxide and the coating layer. The number of moles in phosphorus and the number of moles in the element Z in the above equation can also be measured by XPS and calculated.

(Thickness of Coating Layer)

It is not necessary for a clear boundary to exist between the coating layer and the particles of the lithium metal complex oxide. Therefore, the coating layer refers to a part or a region on the surface side of the coated positive electrode active material of the present embodiment, in which the concentrations of phosphorus and the element Z are higher than those in the particles of the lithium metal complex oxide, i.e., the central region. The coating layer may partially form a solid solution with the lithium metal complex oxide.

The content of the coating layer is not particularly limited, yet it is preferable to adjust the content, specifically, the thickness of the coating layer to be calculated, in accordance with the specific surface area of the particles of the lithium metal complex oxide to be coated. Specifically, the thickness of the coating layer when formed, calculated from the specific surface area of the particles of the lithium metal complex oxide on which the coating layer is formed, and the amount of a coating layer forming solution applied, is preferably 5 nm or greater 15 nm or less. When the thickness of the coating layer is 5 nm or greater, it is easy for the coating ratio to be 60% or greater, making it possible to form the coating layer stably. When the thickness of the coating layer is 5 nm or greater, it is possible to particularly inhibit the reaction between the lithium metal complex oxide and the solid electrolyte.

When the thickness of the coating layer is 15 nm or less, it is possible to particularly inhibit impact on the migration of lithium ions between the lithium metal complex oxide and the solid electrolyte.

<1-3. Other Characteristics of Coated Positive Electrode Active Material for Lithium Ion Secondary Batteries>

The lithium metal complex oxide and the coating layer have been described so far. Here, it is preferable that the coated positive electrode active material of the present embodiment has the following characteristics.

It is preferable that the coated positive electrode active material of the present embodiment consists only of particles of the lithium metal complex oxide and the coating layer. However, impurities might be mixed during the production process. In particular, moisture is an impurity that might get mixed in during formation of the coating layer. Since moisture may cause hydrolysis and degradation of the solid electrolyte and affect the initial discharge capacity, it is preferable that moisture is controlled within a predetermined range.

The amount of water (water content) in the coated positive electrode active material of the present embodiment is preferably 0.08% by mass or less. When the amount of water is 0.08% by mass or less, it is possible to more reliably inhibit a hydrolysis reaction of the solid electrolyte in a secondary battery using the coated positive electrode active material.

As described above, it is preferable that the amount of water in the coated positive electrode active material of the present embodiment is 0.08% by mass or less, because it is possible to more reliably inhibit a hydrolysis reaction of the solid electrolyte. The amount of water in the coated positive electrode active material of the present embodiment can be evaluated by, for example, Karl Fischer method at a heating temperature of 300°C.

The lower limit of the amount of water in the coated positive electrode active material of the present embodiment can be 0% by mass or greater.

<2. Coating Layer Forming Solution and Method for Producing Coated Positive Electrode Active Material for Lithium Ion Secondary Batteries>

(Method for Producing Coated Positive Electrode Active Material)

An example of the configuration of the coating layer forming solution and the method for producing a coated positive electrode active material of the present embodiment will be described below. According to the method for producing a coated positive electrode active material of the present embodiment, the above-described coated positive electrode active material can be produced. Therefore, description of some part of the particulars already described will be omitted. The method for producing a coated positive electrode active material of the present embodiment is one example among production methods, and the method for producing the above-described coated positive electrode active material is not limited to the following production method.

The method for producing a coated positive electrode active material according to the present embodiment may include a precursor forming step and a thermal treatment step described below.

Each step will be described below.

(Precursor Forming Step)

In the precursor forming step, a coating layer forming solution is applied to the surface of the particles of the lithium metal complex oxide and dried, to form a precursor.

The lithium metal complex oxide to be supplied to the precursor forming step is the same as the lithium metal complex oxide already described regarding the coated positive electrode active material. That is, the lithium metal complex oxide has a layered rock salt-type structure and can contain lithium (Li), nickel (Ni), and element M (M) at a ratio by number of moles of Li:Ni:M=a:1-x:x. "a" and "x" satisfy the relationships of $0.98 \leq a \leq 1.20$ and $0 \leq x \leq 1.0$, and the element M can be one or more types of elements except lithium, nickel, and oxygen. More preferred forms of the lithium metal complex oxide have already been described. Therefore, description will be omitted.

The coating layer forming solution is a solution in which lithium, phosphorus, and the element Z are entirely dissolved, and the element Z is at least one or more types of pentavalent transition metal elements. Since the preferred forms of the element Z have already been described, description thereof will be omitted. The coating layer forming solution is a solution used to form the coating layer of the coated positive electrode active material described above.

The coating layer forming solution can be prepared by, for example, mixing a solution containing Li-Z-O with a solution containing Li-P-O while adjusting the pH. The coating layer forming solution may be prepared by adding and mixing components, such as compounds and the like that serve as supply sources of lithium, phosphorus, the element Z, to a solvent such as water. The solvent used for the coating layer forming solution is not limited to water, and one or more types selected from, for example, water and alcohols, such as ethanol and the like, may be used. The coating layer forming solution can be formed by adjusting the content proportion of each element such that the coating layer to be formed has a desired composition. It is preferable that the resulting solution is a transparent solution in which nanoparticles are dissolved, rather than a sol solution in which nanoparticles are dispersed. In other words, it is preferable that the coating layer forming solution to be obtained is a solution in which lithium, phosphorus, and the element Z are entirely dissolved.

The solution in which the elements are entirely dissolved means a solution in which the added components are dissolved and no precipitate is visually confirmed. For example, it can be a transparent solution as described above.

Z/P, which is the ratio by the number of moles of the element Z (Z) to phosphorus (P) contained in the coating layer forming solution, is preferably $0 < Z/P \leq 3.0$, and more preferably $0.5 \leq Z/P \leq 3.0$. By setting Z/P within the above range in the coating layer forming solution, it is possible to set the ratio by number of moles of the element Z (Z) to phosphorus (P) to be contained in the coating layer of the coated positive electrode active material produced using the coating layer forming solution within a predetermined range easily.

In the precursor forming step, the coating layer forming solution can be applied to the particles of the lithium metal complex oxide and dried. The coating and drying apparatus to be used here may be any type that employs a method that can coat the particles of the lithium metal complex oxide thinly and uniformly, and a method of spraying the coating layer forming solution while stirring and fluidizing the lithium metal complex oxide powder. When stirring and fluidizing the particles, it is preferable to use an apparatus that is less likely to be damaged by crushing of the particles or any impact. For example, a rolling fluidized bed apparatus can be used. The rolling fluidized bed apparatus is also preferable because it can simultaneously perform drying by being heated from the outside or by adjusting the temperature of gas (air, and the like) introduced into the apparatus. The drying temperature may be any temperature that is equal to or higher than the temperature at which the solvent of the coating layer forming solution evaporates.

(Thermal Treatment Step)

In the thermal treatment step, the precursor can be thermally treated.

In the thermal treatment step, the precursor in which the dried product of the coating layer forming solution is placed on the surface of the particles of the lithium metal complex oxide formed in the precursor forming step can be thermally treated to completely evaporate the solvent.

The atmosphere of the thermal treatment step can be an air atmosphere, but more preferably, air from which carbon dioxide is removed, or an oxygen atmosphere. The thermal treatment temperature is preferably 300°C or higher, at which the solvent can be evaporated reliably. When it is necessary to enhance the crystallinity of the coating layer, it is preferable to perform the thermal treatment in a range that is equal to or lower than 600°C. By the thermal treatment at 600°C or lower, it is possible to reliably inhibit mixing between the lithium metal complex oxide and the coating layer. The thermal treatment time depends on the thickness of the coating layer, yet is preferably one hour or longer and ten hours or shorter. Thermal treatment for one hour or longer enables sufficient reduction or removal of the solvent in the coating layer. In addition, by setting the thermal treatment to be ten hours or shorter, it is possible to enhance the productivity.

Therefore, in the thermal treatment step, for example, it is preferable to thermally treat the precursor for 1 hour or longer and 10 hours or shorter in dry air or an oxygen atmosphere at a thermal treatment temperature of 300°C or higher and 600°C or lower. The atmosphere is more preferably an oxygen atmosphere.

The coated positive electrode active material obtained through the thermal treatment step may contain the lithium metal complex oxide and the coating layer coating at least a part of the surface of the lithium metal complex oxide. The coating ratio of the coating layer described regarding the coated positive electrode active material is preferably 60% or greater. Since the method of calculating the coating ratio and the preferable range of the coating ratio have already been described, description will be omitted.

<3. All-Solid-State Lithium Ion Secondary Battery>

Next, an example configuration of an all-solid-state lithium ion secondary battery of the present embodiment will be described. For example, as shown in FIG. 2, an all-solid-state lithium ion secondary battery 20 of the present embodiment may include a positive electrode 21 containing the coated positive electrode active material described above, a negative electrode 23, and a solid electrolyte layer 22. These members can be sealed in a container 24. The positive electrode 21 and the negative electrode 23 may be provided with a positive electrode terminal 211 and a negative electrode terminal 231, respectively, such that they can be connected to members outside the container 24.

Each member of a secondary battery of the present embodiment will be described below. Note that the embodiments described below are only examples, and the all-solid-state lithium ion secondary battery of the present invention may be implemented based on the embodiments described herein with various modifications and improvements applied based on the knowledge of those skilled in the art. The use of the all-solid-state lithium ion secondary battery of the present embodiment is not particularly limited.

<3-1. Positive Electrode>

The positive electrode can be formed by molding a positive electrode mixture. The positive electrode is appropriately treated to suit the battery in which it is used. For example, in order to increase the electrode density, pressure-compression treatment by a press or the like can be performed.

The positive electrode mixture can be formed by mixing, for example, the coated positive electrode active material described above that has a powder state and a solid electrolyte.

The solid electrolyte is added to impart an appropriate ionic conductivity to the electrode.

The material of the solid electrolyte is not particularly limited. For example, sulfide-based solid electrolytes, such as $Li_3PS_4$, $Li_7P_3S_{11}$, $Li_{10}GeP_2S_{12}$, and the like, oxide-based solid electrolytes, such as $Li_7La_3Zr_2O_{12}$, $Li_{0.34}La_{0.31}TiO_{2.94}$, and the like, and polymer-based electrolytes, such as PEO and the like, can be used.

A binder or a conductive agent (conductive assistant) can be added to the positive electrode mixture.

The conductive agent is added to impart an appropriate conductivity to the electrode. The material of the conductive agent is not particularly limited. For example, graphite, such as natural graphite, artificial graphite, expanded graphite, and the like, and materials, such as acetylene black, Ketjen black (registered trademark), carbon nanotubes, fibrous graphite, and the like, can be used.

Although the binder serves to bind the coated positive electrode active material, it is not necessary to add the binder if it is not necessary. The binder used in the positive electrode mixture is not particularly limited. One or more types selected from polyvinylidene fluoride (PVDF), polytetrafluoroethylene (PTFE), fluororubber, ethylene propylene diene rubber, styrene-based thermoplastic elastomer, hydrogenated styrene-based thermoplastic elastomer, cellulose-based resin, polyacrylic acid, and the like can be used.

The mixing ratio between the respective substances in the positive electrode mixture is not particularly limited. For example, the content of the coated positive electrode active material in the positive electrode mixture can be 50 parts by mass or greater and 90 parts by mass or less, and the content of the solid electrolyte can be 10 parts by mass or greater and 50 parts by mass or less.

However, the production method of the positive electrode is not limited to the above-described example, and other methods may be used.

<3-2. Negative Electrode>

The negative electrode can be formed by molding metals (lithium metal, indium metal, lithium-indium alloy, lithium-aluminum alloy, Si or alloy containing Si, and the like) or a negative electrode mixture.

In spite of the differences in the constituents, blending thereof, and the like, the negative electrode mixture can be formed by substantially the same method as described above regarding the positive electrode, and is subjected to various treatments if necessary as the positive electrode is.

The negative electrode mixture can be prepared by mixing a negative electrode active material with a solid electrolyte. For example, an occlusion material that can occlude lithium ions and from which lithium ions can be desorbed can be used as the negative electrode active material.

The occlusion material is not particularly limited. One or more types selected from, for example, powders of natural graphite, artificial graphite, organic compound fired bodies of phenolic resin and the like, and carbon materials, such as coke and the like, can be used. When such an occlusion material is used as the negative electrode active material, a sulfide electrolyte, such as $Li_3PS_4$ and the like, can be used as the solid electrolyte, as is used in the positive electrode.

<3-3. Solid Electrolyte Layer>

As the solid electrolyte contained in the solid electrolyte layer, for example, an inorganic solid electrolyte can be used. As the inorganic solid electrolyte, oxide-based solid electrolytes, sulfide-based solid electrolytes, and the like can be used.

The oxide-based solid electrolyte is not particularly limited, and any oxide-based solid electrolytes can be used as long as they contain oxygen (O) and have lithium ion conductivity and electronic insulation. Examples of the oxide-based solid electrolyte include lithium phosphate $(Li_3PO_4)$, $Li_3PO_4N_x$, $LiBO_2N_x$, $LiNbO_3$, $LiTaO_3$, $Li_2SiO_3$, $Li_4SiO_4$-$Li_3PO_4$, $Li_4SiO_4$-$Li_3VO_4$, $Li_2O$-$B_2O_3$-$P_2O_5$, $Li_2O$-$SiO_2$, $Li_2O$-$B_2O_3$-$ZnO$, $Li_{1+X}Al_XTi_{2-X}(PO_4)_3$ $(0 \leq X \leq 1)$, $Li_{1+X}Al_XGe_{2-X}(PO_4)_3$ $(0 \leq X \leq 1)$, $LiTi_2(PO_4)_3$, $Li_{3X}La_{2/3-X}TiO_3$ $(0 \leq X \leq 2/3)$, $Li_5La_3Ta_2O_{12}$, $Li_7La_3Zr_2O_{12}$, $Li_6BaLa_2Ta_2O_{12}$, $Li_{3.6}Si_{0.6}P_{0.4}O_4$, and the like.

The sulfide-based solid electrolyte is not particularly limited, and any sulfide-based solid electrolytes can be used as long as they contain sulfur (S) and have lithium ion conductivity and electronic insulation. Examples of the sulfide-based solid electrolyte include $Li_2S$-$P_2S_5$, $Li_2S$-$SiS_2$, $LiI$-$Li_2S$-$SiS_2$, $LiI$-$Li_2S$-$P_2S_5$, $LiI$-$Li_2S$-$B_2S_3$, $Li_3PO_4$-$Li_2S$-$Si_2S$, $Li_3PO_4$-$Li_2S$-$SiS_2$, $LiPO_4$-$Li_2S$-$SiS$, $LiI$-$Li_2S$-$P_2O_3$, $LiI$-$Li_3PO_4$-$P_2S_5$, $Li_6PS_5Cl$, $Li_6PS_5Br$, $Li_{10}GeP_2S_{12}$, $Li_{9.54}Si_{1.74}P_{1.44}S_{11.7}Cl_{0.3}$, and the like.

As the inorganic solid electrolyte, a material other than the above may be used. For example, $Li_3N$, $LiI$, $Li_3N$-$LiI$-$LiOH$, or the like may be used.

<3-4. Shape and Configuration of Secondary Battery>

Next, an example of positioning and configuration of the members of the secondary battery of the present embodiment will be described.

The secondary battery of the present embodiment including the positive electrode, the negative electrode, and the solid electrolyte layer described above can have various shapes to which a certain level of pressure can be applied, such as coin type or laminated type. Regardless of the shape, for example, as described with reference to FIG. 2, the positive electrode and the negative electrode can be laminated via the solid electrolyte. Then, the positive electrode current collector and the positive electrode terminal leading to the outside are connected to each other using a current collecting lead or the like, and so are the negative electrode current collector and the negative electrode terminal leading to the outside, and they are tightly sealed in the battery case. In this way, the secondary battery can be completed.

The secondary battery of the present embodiment using the coated positive electrode active material described above can be an all-solid-state lithium ion secondary battery having a charge/discharge capacity equivalent to the charge/discharge capacity exhibited by a lithium ion battery using an electrolytic solution.

<3-5. Battery Evaluation of Secondary Battery>

Battery evaluation of the secondary battery according to the present embodiment using the coated positive electrode active material described above can be performed under, for example, the following conditions.

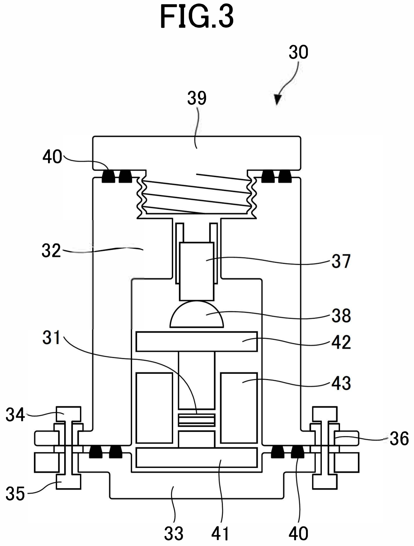

Specifically, the test battery 30 shown in FIG. 3 is assembled by using the coated positive electrode active material in the positive electrode, and is charged up to a cut-off voltage of 4.8 V (vs. $Li/Li^+$) at a current density of 0.5 $mA/cm^2$. After resting for 1 hour, the battery is discharged down to a cut-off voltage of 3.0 V (vs. $Li/Li^+$). This cycle is formed for 50 cycles, and the capacity retention rate here can be compared with that of a battery including no coating layer or a battery including another type of a coating layer. In this way, the effectiveness can be evaluated.

The use of the secondary battery according to the present embodiment is not particularly limited, and it can be suitably used for applications in which various power sources are required. In addition, the secondary battery according to the present embodiment has a charge/discharge capacity equivalent to the charge/discharge capacity exhibited by a lithium ion secondary battery using an electrolytic solution, and can be reduced in size. Therefore, it is also suitable as a power source for electric vehicles, which have constraints on the mounting space.

Examples

Hereinafter, the present invention will be described in more detail by way of Examples. However, the present invention is not limited by these Examples by any means.

[Example 1]

(1) Physical Properties of Particles of Lithium Metal Complex Oxide

(1-1) Chemical Composition

As a result of by a quantitative analysis using an ICP atomic emission spectrometer (obtained from VARIAN, 725ES), the chemical composition of the lithium metal complex oxide was confirmed to have a ratio by number of moles of Li:Ni:Co:Al=1.02:0.80:0.15:0.05 between Li, Ni, Co, and Al.

(1-2) Crystal Structure

The crystal structure of the lithium metal complex oxide, measured by XRD (obtained from Malvern Panalytical Ltd., X'Pert, PROMRD), was found to be a layered rock salt-type structure that belongs to the R-3m structure.

(1-3) Specific Surface Area

The BET specific surface area of the lithium metal complex oxide, measured using a fully automated BET specific surface area measuring device (obtained from Mountech Co., Ltd., Macsorb), was found to be 0.58 $m^2/g$.

(1-4) Volume Average Particle Diameter

The volume average particle diameter of the lithium metal complex oxide, measured using a laser diffraction-scattering particle size analyzer (obtained from Nikkiso Co., Ltd. Microtrac HRA), found to be 5.8 $\mu$m.

(2) Production of Coated Positive Electrode Active Material

(2-1) Preparation of Coating Layer Forming Solution

A hydrogen peroxide solution, niobium hydroxide, aqua ammonia, lithium hydroxide, and $LiH_2PO_4$ were sequentially added to ion-exchanged water in a predetermined procedure and mixed, to prepare an aqueous solution in which they were entirely dissolved. The resulting coating layer forming solution was mixed such that the ratio by number of moles of niobium (Nb) to phosphorus (P) (Nb/P) contained would be 1.0. The value of Nb/P in the coating layer forming solution is shown in the "Nb/P in coating layer forming solution" field of Table 1.

(2-2) Formation of Coating Layer

A coated positive electrode active material was produced by subjecting a powder of a lithium metal complex oxide $Li_{1.02}Ni_{0.80}Co_{0.15}Al_{0.05}O_2$ to the following precursor forming step and thermal treatment step.

(Precursor Forming Step)

The total surface area ($m^2$), which the particles of the lithium metal complex oxide, on which a coating layer was to be formed, had by their total weight (g) was calculated from the specific surface area ($m^2/g$) of the particles of the lithium metal complex oxide. A further calculation was performed using the density of an $LiPO_3$ crystal (2.46 $g/cm^3$) and the density of an $LiNbO_3$ crystal (4.65 $g/cm^3$), such that a target coating layer thickness of 7 nm would be achieved on the calculated total surface area, to thereby adjust the amount of the coating layer forming solution. The value of the target coating layer thickness is shown in the "Coating layer thickness (target value)" field of Table 1. Next, 500 g of the lithium metal complex oxide powder was weighed out, and fluidized in a rolling fluidized bed granulation/coating apparatus (obtained from Powrex Corp., MP-01), to spray the coating layer forming solution into the fluidized bed. Here, the temperature of the air supplied into the fluidized bed was controlled at 120°C, and the coating process was performed slowly for 4 hours, to thereby form a precursor.

(Thermal Treatment Step)

The precursor, which was the powder obtained in the precursor forming step, was recovered, and subjected to thermal treatment for 2 hours under an oxygen atmosphere at a thermal treatment temperature of 300°C to produce a coated positive electrode active material including a coating layer containing Li, P, and Nb from which water serving as a solvent had been completely removed. A composition analysis of the coated positive electrode active material in its cross-section was performed using EDX, to successfully confirm that the coating layer was positioned on the surface of the lithium metal complex oxide. The following other Examples were also successfully confirmed to have the same or similar structure.

(3) Evaluation of Coated Positive Electrode Active Material

The coated positive electrode active material thus obtained was evaluated as follows.

(3-1) Surface Analysis

The coated positive electrode active material was measured by XPS (obtained from Ulvac-Phi, Incorporated, Versa Probe II). The numbers of moles (at%) in the respective elements on the surface of the coated positive electrode active material were determined from the semi-quantitative values calculated from the peak areas of $Ni=2p_{3/2}$, $Co=2p_{3/2}$, $Al=2p$, $P=2p$, and $Nb=3d_{5/2}$ spectra. The coating ratio, which is the ratio of the sum of the numbers of moles in P and Nb that were present on the surface to the sum of the numbers of moles in P, Nb, Ni, Co, and Al, was $(P+Nb)/(P+Nb+Ni+Co+Al) \times 100 = 86\%$. The evaluation result is shown in the "Coating ratio" field of Table 1.
The ratio by number of moles of Nb to P was calculated, and Nb/P was found to be 0.96. The evaluation result is shown in the "Nb/P" field of Table 1.

(3-2) Water Content

The water content in the coated positive electrode active material, measured using a Karl Fischer moisture meter (obtained from Kyoto Electronics Manufacturing Co., Ltd., model: MKC210) at a heating temperature of 300°C, was 0.045% by mass.

(4) Preparation of Secondary Battery

An all-solid-state lithium ion secondary battery having the structure shown in FIG. 3 (hereinafter referred to as "test battery") was used for battery evaluation of the coated positive electrode active material. The test battery 30 was composed of a case and a powder compact cell 31 contained in the case.
The case includes a hollow negative electrode can 32 opened at one, and a positive electrode can 33 to be set in the opening of the negative electrode can 32. The case is configured such that when the positive electrode can 33 is set in the opening of the negative electrode can 32, a space for accommodating the powder compact cell 31 is formed between the positive electrode can 33 and the negative electrode can 32. The positive electrode can 33 is fixed to the negative electrode can 32 by a thumbscrew 34 and a nut 35.
The negative electrode can 32 has a terminal for the negative electrode and the positive electrode can 33 has a terminal for the positive electrode. The case is provided with an insulating sleeve 36. The insulating sleeve 36 fixes the negative electrode can 32 and the positive electrode can 33 in a non-contacting state.
The closed end of the negative electrode can 32 is provided with a pressure screw 37. After the positive electrode can 33 is fixed to the negative electrode can 32, the pressure screw 37 is tightened toward the powder compact cell-housing space, to hold the powder compact cell 31 in a pressured state via a hemispherical washer 38. One end of the negative electrode can 32 where the pressure screw 37 exists is provided with a screw-in plug 39. O-rings 40 are provided between the negative electrode can 32 and the positive electrode can 33 and between the negative electrode can 32 and the plug 39 to seal the gap between the negative electrode can 32 and the positive electrode can 33 and maintain airtightness in the case.
The powder compact cell 31 is composed of a positive electrode layer, a solid electrolyte layer, and a negative electrode layer, and is a pellet in which these layers were laminated in this order. The positive electrode layer contacts the inner surface of the positive electrode can 33 via a lower current collector 41, and the negative electrode layer contacts the inner surface of the negative electrode can 32 via an upper current collector 42, the washer 38, and the pressure screw 37. The lower current collector 41, the powder compact cell 31, and the upper current collector 42 are protected by a sleeve 43 from electrical contact by the positive electrode layer and negative electrode layer.
The test battery 30 was produced as follows.

First, a positive electrode mixture was prepared by mixing 60 mg of the coated positive electrode active material and 40 mg of a $Li_3PS_4$ solid electrolyte in a mortar. Next, a mold capable of producing a pellet having a diameter of 10 mm was prepared, and 60 mg of the solid electrolyte was added into the mold and compression-molded at 10 MPa. Next, 15 mg of the positive electrode mixture was added and compressed at 360 MPa to obtain a two-layer pellet composed of a positive electrode layer and a solid electrolyte layer.

In order from the bottom, a lower electrode, the pellet with the positive electrode layer facing downward, an indium foil serving as a negative electrode layer, and an upper electrode were laminated in this order. After the electrodes were sealed in the case, the pressure screw 37 was tightened at a torque of 6 N·m to 7 N·m to apply a restraining force. The test battery 30 was produced in an Ar atmosphere glovebox with a dew point controlled to -80°C.

(5) Evaluation of Secondary Battery

The cycle characteristics of the test battery were evaluated under the following conditions.

A resting period of 1 hour was provided until the Open Circuit Voltage OCV was roughly stabilized. Then, the battery was charged up to a cutoff voltage of 4.8 V (vs. Li/Li$^+$) at a constant current density of 0.5 mA/cm$^2$. After a resting period of 1 hour, a reverse current was flowed down to a cutoff voltage of 3.0 V (vs. Li/Li$^+$) at a current density of 0.5 mA/cm$^2$, and the discharge capacity was measured. Regarding this operation from charging to discharging as "1 cycle," a total of 50 cycles were performed. The discharge capacity (mAh/g) at the fiftieth cycle was divided by the discharge capacity (mAh/g) at the second cycle, to calculate a capacity retention rate (%).

Since the capacity of a battery varies depending on the members and configuration of the battery, and measurement conditions, a relative rate regarding the capacity retention rate of a $LiNbO_3$-coated lithium metal complex oxide shown in Comparative Example 1 as being 1 is shown in Table 1. When the relative rate is greater than 1, it means that the capacity retention rate is high, that is, it is possible to inhibit deterioration, and to inhibit a decrease in the battery capacity through repeated charging and discharging in an application to an all-solid-state lithium ion secondary battery using a solid electrolyte. In Example 1, the capacity retention rate, which is a relative rate, was 1.44. The evaluation result is shown in the "Capacity retention rate (relative rate)" field of Table 1.

[Example 2]

In Example 2, $Li_{1.1}Ni_{0.38}Co_{0.32}Mn_{0.30}O_2$ (layered rock salt-type structure, having a specific surface area of 0.68 m$^2$/g, and a volume average particle diameter of 4.7 μm) (450 g) was used as a lithium metal complex oxide. Except for the above point, a coated positive electrode active material was prepared under the same conditions as in Example 1 and evaluated.

When calculating the coating ratio after the thermal treatment, (P+Nb)/(P+Nb+Ni+Co+Mn)×100 was calculated. Mn in the above equation is the number of moles (at%) in Mn determined from a semi-quantitative value calculated from the peak area of an $Mn=2p_{3/2}$ spectrum obtained by XPS measurement of the coated positive electrode active material.

The coating ratio after the thermal treatment was 88% and the Nb/P was 0.96. The capacity retention rate, which is a relative rate obtained as battery evaluation, was 1.39.

[Example 3]

When preparing a coating layer forming solution, the Nb/P ratio in the coating layer forming solution was adjusted to 0.5. Except for the above point, a coated positive electrode active material was prepared under the same conditions as in Example 1 and evaluated. After the thermal treatment, the coating ratio was 85% and the Nb/P was 0.52. The capacity retention ratio, which is a relative ratio obtained as a battery evaluation, was 1.30.

[Example 4]

When preparing a coating layer forming solution, the Nb/P ratio in the coating layer forming solution was adjusted to 3.0. Except for the above point, a coated positive electrode active material was prepared under the same conditions as in Example 1 and evaluated. After the thermal treatment, the coating ratio was 82% and the Nb/P was 2.9. The capacity retention rate, which is a relative rate obtained as a battery evaluation, was 1.28.

[Example 5]

In the precursor forming step, the amount of the coating layer forming solution was adjusted based on a calculation for achieving a target coating layer thickness of 5 nm. Except for the above point, a coated positive electrode active material was prepared under the same conditions as in Example 1 and evaluated. After the thermal treatment, the coating ratio was 68% and Nb/P was 1.1. The capacity retention rate, which is a relative rate obtained as a battery evaluation, was 1.32.

[Example 6]

As a coating layer forming solution, lithium hydroxide and an aqueous solution of $LiH_2PO_4$ dissolved in ion-exchanged water were sequentially added to a niobium oxide-based inorganic coating liquid "Viral Nb-G 6000" obtained from Taki Chemical Co., Ltd., in a predetermined procedure, and then mixed, to prepare an aqueous solution in which the materials were entirely dissolved. The obtained coating layer forming solution was mixed such that the ratio (Nb/P) by number of moles of niobium (Nb) to phosphorus (P) contained therein would be 1.0.
Except for the above point, a coated positive electrode active material was prepared under the same conditions as in Example 1 and evaluated. After the thermal treatment, the coating ratio was 88% and the Nb/P was 1.0. The capacity retention rate, which is a relative rate obtained as a battery evaluation, was 1.36.

[Example 7]

A coating layer forming solution was prepared by mixing two types of solutions, using an Li-Nb solution in which lithium ethoxide and niobium ethoxide were dissolved in ethanol, and an Li-P solution in which lithium ethoxide and triethyl phosphate were dissolved in ethanol.
In the coating layer forming solution, the materials were mixed such that the ratios Li:Nb and Li:P by number of moles would be 1:1 and 1:30, so triethyl phosphate was excessively added. That is, the materials were mixed such that the ratio (Nb/P) by number of moles of niobium (Nb) to phosphorus (P) to be contained in the coating layer forming solution to be obtained would be 1/30.
Except for the above point, a coated positive electrode active material was prepared under the same conditions as in Example 1 and evaluated. After the thermal treatment, the coating ratio was 86% and the Nb/P was 0.95. The capacity retention rate, which is a relative rate obtained as a battery evaluation, was 1.33.

[Comparative Example 1]

As a coating layer forming solution, a solution obtained by weighing out lithium ethoxide and niobium ethoxide such that Li:Nb would be 1:1 (ratio by number of moles), and dissolving them in ethanol was used. Except for the above point, a coated positive electrode active material was prepared under the same conditions as in Example 1 and evaluated. The coating ratio after the thermal treatment was 81%. The capacity retention rate, which is a relative rate obtained as a battery evaluation, was 1.00, which was used as the reference.

[Comparative Example 2]

As a coating layer forming solution, a solution obtained by mixing an Li-Nb solution in which lithium ethoxide and niobium ethoxide were dissolved in ethanol and an Li-P solution in which lithium ethoxide and triethyl phosphate were dissolved in ethanol was used. When mixing the Li-Nb solution and the Li-P solution, they were mixed with adjustment such that the ratios Li:Nb and Li:P by number of moles would both be 1:1. Except for the above point, a coated positive electrode active material was prepared under the same conditions as in Example 1 and evaluated. After the thermal treatment, the coating ratio was 32% and the Nb/P was 28. The capacity retention rate, which is a relative ratio obtained as a battery evaluation, was 1.02.

[Comparative Example 3]

When preparing a coating layer forming solution, the Nb/P in the coating layer forming solution was adjusted to 0.3. Except for the above point, a coated positive electrode active material was prepared under the same conditions as in Example 1 and evaluated. After the thermal treatment, the coating ratio was 83% and the Nb/P was 0.26. The capacity retention rate, which is a relative rate obtained as battery evaluation, was 0.94.

[Comparative Example 4]

When preparing a coating layer forming solution, Nb/P in the coating layer forming solution was adjusted to 3.6. Except for the above point, a coated positive electrode active material was prepared under the same conditions as in Example 1 and evaluated. After the thermal treatment, the coating ratio was 80% and the Nb/P was 3.7. The capacity retention rate, which is a relative rate obtained as a battery evaluated, was 1.05.

[Comparative Example 5]

In the precursor forming step, the amount of the coating layer forming solution was adjusted based on a calculation for achieving a target coating layer thickness of 2.4 nm. Except for the above point, a coated positive electrode active material was prepared under the same conditions as in Example 1 and evaluated. After the thermal treatment, the coating ratio was 53% and the Nb/P was 1.0. The capacity retention rate, which is a relative rate obtained as a battery evaluation, was 1.10.

[Table 1]

| | Lithium metal complex oxide | Nb/P in coating layer forming solution | Coating layer thickness (target value) (nm) | Coating ratio (%) | Nb/P | Capacity retention rate (relative rate) |
|---|---|---|---|---|---|---|
| | Production conditions | | | Evaluation results of coated positive electrode active material | | |
| Ex. 1 | $Li_{1.02}Ni_{0.80}Co_{0.15}Al_{0.05}O_2$ | 1.0 | 7 | 86 | 0.96 | 1.44 |
| Ex. 2 | $L_{i1.1}Ni_{0.38}Co_{0.32}Mn_{0.30}O_2$ | 1.0 | 7 | 88 | 0.96 | 1.39 |
| Ex. 3 | $Li_{1.02}Ni_{0.80}Co_{0.15}Al_{0.05}O_2$ | 0.5 | 7 | 85 | 0.52 | 1.30 |
| Ex. 4 | $Li_{1.02}Ni_{0.15}6Al_{0.05}O_2$ | 3.0 | 7 | 82 | 2.9 | 1.28 |
| Ex. 5 | $Li_{1.02}Ni_{0.80}Co_{0.15}Al_{0.05}O_2$ | 1.0 | 5 | 68 | 1.1 | 1.32 |
| Ex. 6 | $Li_{1.02}Ni_{0.80}Co_{0.15}Al_{0.05}O_2$ | 1.0 | 7 | 88 | 1.0 | 1.36 |
| Ex. 7 | $Li_{1.02}Ni_{0.80}Co_{0.15}Al_{0.05}O_2$ | 1/30 | 7 | 86 | 0.95 | 1.33 |
| Comp. Ex. 1 | $Li_{1.02}Ni_{0.80}Co_{0.15}Al_{0.05}O_2$ | - | 7 | 81 | - | 1.00 |
| Comp. Ex. 2 | $Li_{1.02}Ni_{0.10}Co_{0.15}Al_{0.05}O_2$ | 1.0 | 7 | 32 | 28 | 1.02 |
| Comp. Ex. 3 | $Li_{1.02}Ni_{0.80}CO_{0.15}Al_{0.05}O_2$ | 0.3 | 7 | 83 | 0.26 | 0.94 |
| Comp. Ex. 4 | $Li_{1.02}Ni_{0.80}Co_{0.15}Al_{0.05}O_2$ | 3.6 | 7 | 80 | 3.7 | 1.05 |
| Comp. Ex. 5 | $Li_{1.02}Ni_{0.80}Co_{0.15}Al_{0.05}O_2$ | 1.0 | 2.4 | 53 | 1.0 | 1.10 |

This application claims priority rights based on Japanese Patent Application No. 2023-059405 filed with the Japan Patent Office on March 31, 2023 and Japanese Patent Application No. 2023-093516 filed with the Japan Patent Office on June 6, 2023. The entire contents of Japanese Patent Application No. 2023-059405 and Japanese Patent Application No. 2023-093516 are incorporated in this international application.

REFERENCE SIGNS LIST

10 coated positive electrode active material for lithium ion secondary batteries
11 lithium metal complex oxide
12 coating layer
20 all-solid-state lithium ion secondary battery
21 positive electrode
211 positive electrode terminal
22 solid electrolyte layer
23 negative electrode
231 negative electrode terminal
24 container
30 test battery
31 powder compact cell
32 negative electrode can
33 positive electrode can

34 thumbscrew

35 nut

36 insulating sleeve

37 pressure screw

38 washer

39 plug

40 O-ring

41 lower current collector

42 upper current collector

43 sleeve

**Claims**

1.  A coated positive electrode active material for lithium ion secondary batteries, the coated positive electrode active material comprising:

    a lithium metal complex oxide; and

    a coating layer coating at least a part of a surface of the lithium metal complex oxide at a coating ratio of 60% or greater,

    wherein the lithium metal complex oxide has a layered rock salt-type structure and contains lithium (Li), nickel (Ni), and an element M (M) at a ratio by number of moles of Li:Ni:M=a:1-x:x, where "a" and "x" satisfy relationships of $0.98 \leq a \leq 1.20$ and $0 \leq x \leq 1.0$, and the element M is one or more types of elements except lithium, nickel, and oxygen, and

    the coating layer contains lithium, phosphorus, and an element Z, where the element Z is at least one or more types of pentavalent transition metal elements.

2.  The coated positive electrode active material for lithium ion secondary batteries according to claim 1,
    wherein the element M is at least one or more selected from Al, Ti, V, Mn, Fe, Co, Cu, Zr, Nb, Mo, Ta, and W.

3.  The coated positive electrode active material for lithium ion secondary batteries according to claim 1 or 2,
    wherein Z/P, which is a ratio by number of moles of the element Z (Z) to phosphorus (P) contained in the coating layer, satisfies $0.5 \leq Z/P \leq 3.0$.

4.  The coated positive electrode active material for lithium ion secondary batteries according to claim 1 or 2,
    wherein the element Z is niobium.

5.  A coating layer forming solution used for forming the coating layer included in the coated positive electrode active material for lithium ion secondary batteries of claim 1 or 2,
    wherein the coating layer forming solution is a solution in which lithium, phosphorus, and the element Z are entirely dissolved.

6.  A method for producing a coated positive electrode active material for lithium ion secondary batteries, the method comprising:

    a precursor forming step of applying a coating layer forming solution to a surface of particles of a lithium metal complex oxide, and drying the coating layer forming solution, to form a precursor; and

    a thermal treatment step of thermally treating the precursor,

    wherein the lithium metal complex oxide has a layered rock salt-type structure, and contains lithium (Li), nickel (Ni), and an element M (M) at a ratio by number of moles of Li:Ni:M=a:1-x:x, where "a" and "x" satisfy relationships of $0.98 \leq a \leq 1.20$ and $0 \leq x \leq 1.0$, and the element M is one or more types of elements except lithium, nickel, and oxygen,

    the coating layer forming solution is a solution in which lithium, phosphorus, and the element Z are entirely dissolved, and

    the element Z is at least one or more types of pentavalent transition metal elements.

7.  The method for producing a coated positive electrode active material for lithium ion secondary batteries according to claim 6,

wherein in the thermal treatment step, the precursor is thermally treated in an oxygen atmosphere at a thermal treatment temperature of 300°C or higher and 600°C or lower for 1 hour or longer and 10 hours or shorter.

8. An all-solid-state lithium ion secondary battery, comprising:

   a positive electrode;
   a negative electrode; and
   a solid electrolyte layer,
   wherein the positive electrode contains the coated positive electrode active material for lithium ion secondary batteries of claim 1 or 2.

# FIG.1

# FIG.2

# FIG.3

## INTERNATIONAL SEARCH REPORT

| International application No. |
| --- |
| **PCT/JP2024/012911** |

### A. CLASSIFICATION OF SUBJECT MATTER

***H01M 4/525***(2010.01)i; ***C01G 53/00***(2006.01)i; ***H01M 4/36***(2006.01)i; ***H01M 4/131***(2010.01)i; ***H01M 4/505***(2010.01)i; ***H01M 10/052***(2010.01)i; ***H01M 10/0562***(2010.01)i

FI: H01M4/525; H01M4/505; H01M4/36 C; H01M10/0562; H01M10/052; H01M4/131; C01G53/00 A

According to International Patent Classification (IPC) or to both national classification and IPC

### B. FIELDS SEARCHED

Minimum documentation searched (classification system followed by classification symbols)

H01M4/525; H01M4/00-4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/163585 A1 (GS YUASA INTERNATIONAL LTD.) 04 August 2022 (2022-08-04) paragraphs [0037], [0056], [0089], [0094], [0137]-[0140], table 1, examples 8-10, fig. 1 | 1-6, 8 |
| Y | paragraph [0094] | 7 |
| X | JP 2016-39062 A (TOYOTA MOTOR CORP.) 22 March 2016 (2016-03-22) paragraphs [0032], [0044], table 1, examples 1-6 | 1-2, 4, 8 |
| A | | 3, 5-7 |
| Y | JP 2021-103671 A (SUMITOMO METAL MINING CO., LTD.) 15 July 2021 (2021-07-15) paragraphs [0005]-[0006], [0026]-[0027], [0060]-[0075], [0077], fig. 1, 3 | 7 |
| P, A | CN 116504978 A (CENTRAL SOUTH UNIVERSITY) 28 July 2023 (2023-07-28) | 1-8 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **16 May 2024** | **04 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/012911**

| Patent document cited in search report | | | Publication date (day/month/year) | Patent family member(s) | Publication date (day/month/year) |
|---|---|---|---|---|---|
| WO | 2022/163585 | A1 | 04 August 2022 | CN 116830300 A paragraphs [0046], [0068], [0108], [0114], [0174]-[0185], table 1, examples 8-10, fig. 1 | |
| JP | 2016-39062 | A | 22 March 2016 | (Family: none) | |
| JP | 2021-103671 | A | 15 July 2021 | US 2023/0037673 A1 paragraphs [0005]-[0006], [0036]-[0037], [0082]-[0100], [0102], fig. 1, 3 WO 2021/132512 A1 CN 115280553 A | |
| CN | 116504978 | A | 28 July 2023 | (Family: none) | |

Form PCT/ISA/210 (patent family annex) (July 2022)

**EP 4 693 489 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014056661 A
- JP 2023059405 A
- JP 2023093516 A

**Non-patent literature cited in the description**

- **NARUMI OHTA et al.** LiNbO3-coated LiCoO2 as cathode material for all solid-state lithium secondary batteries. *Electrochemistry Communications*, 2007, vol. 9, 1486-1490
- **WILLIAM D. et al.** Interface Stability in Solid-State Batterie. *Chem. Mater.*, 2016, vol. 28, 266-273